# FASCICULE DE BREVET EUROPEEN

(11) **EP 4 592 188 B1**
(45) Date de publication et mention de la délivrance du brevet: **21.10.2026**
(21) Numéro de dépôt: 25154544.8
(22) Date de dépôt: 28.01.2025
(51) Int. Cl.: B64D 27/40, B64D 27/18

(54) **ENSEMBLE PROPULSIF POUR AÉRONEF COMPORTANT UN TURBORÉACTEUR, UN MAT ET DES MOYENS D'ACCROCHAGE DU TURBORÉACTEUR AU MÂT**
ANTRIEBSEINHEIT FÜR EIN FLUGZEUG MIT EINEM TRIEBWERK, EINEM MAST UND MITTELN ZUR BEFESTIGUNG DES TRIEBWERKS AN DEM MAST
PROPULSION ASSEMBLY FOR AN AIRCRAFT COMPRISING A TURBOJET ENGINE, A PYLON AND MEANS FOR ATTACHING THE TURBOJET ENGINE TO THE PYLON

(30) Priorité: 29.01.2024 US 202463626160 P
(43) Date de publication de la demande: 30.07.2025
(73) Titulaire: Airbus Operations SAS, 31060 Toulouse (FR)
(72) Inventeur: PAUTIS, Olivier, 31060 TOULOUSE (FR); DE-NICOLA, Marc, 31060 TOULOUSE (FR); GRIMAL, Fabrice, 31060 TOULOUSE (FR); JOURNADE, Frédéric, 31060 TOULOUSE (FR); GUENEAU, Germain, 31060 TOULOUSE (FR); COLMAGRO, Jérôme, 31060 TOULOUSE (FR)
(74) Mandataire: Cabinet Le Guen Maillet

(56) Documents cités:
- EP-A1- 4 112 476
- EP-B1- 3 344 544
- US-A1- 2018 134 402
- US-A1- 2023 365 247
- US-B2- 10 144 526
- US-B2- 7 451 947

## Description

### DOMAINE TECHNIQUE

La présente invention se rapporte au domaine général de l'accrochage d'un turboréacteur sous l'aile d'un aéronef. Elle concerne en particulier un ensemble propulsif comprenant un turboréacteur, par exemple de type turboréacteur à soufflante non carénée, un mât ainsi qu'un ensemble d'accrochage destiné à l'accrochage du turboréacteur sous le mât. Elle concerne également un aéronef équipé d'un tel ensemble propulsif.

### ÉTAT DE LA TECHNIQUE ANTÉRIEURE

Un aéronef comporte classiquement des ailes et au moins un ensemble propulsif fixé sous chacune de ces ailes. Chaque ensemble propulsif comprend un mât d'accrochage et un moteur. Le mât d'accrochage présente une structure rigide appelée « structure primaire » qui est fixée entre l'aile et le moteur par l'intermédiaire d'ensembles d'accrochage, à savoir un premier ensemble d'accrochage entre l'aile et le mât d'accrochage et un deuxième ensemble d'accrochage entre le mât et le moteur.

Les documents US-A-2023/365247, US-B-7,451,947, EP-B-3 344 544, US-A-2018/134402, US-B-10,144,526 et EP-A-4 112 476 divulguent des ensembles propulsif de l'état de la technique.

Bien qu'un tel ensemble moteur soit efficace, l'évolution des turboréacteurs entraîne la nécessité de développer des mâts d'accrochage qui, entre autres, permettent de minimiser les efforts entre le turboréacteur, le mât d'accrochage et l'aile, et en particulier les efforts de torsion du carter moteur.

### EXPOSÉ DE L'INVENTION

Un objet de la présente invention est de proposer un ensemble propulsif comprenant un turboréacteur, un mât et un dispositif d'accrochage destiné à l'accrochage du turboréacteur sous le mât, et qui permet, entre autres, de minimiser les efforts de torsion du carter moteur. À cet effet, est proposé un ensemble propulsif d'un aéronef, ledit ensemble propulsif présentant un axe longitudinal et un plan médian vertical passant par l'axe longitudinal et comportant :
- un turboréacteur comportant un carter autour de l'axe longitudinal et une hélice à l'avant du carter, où l'axe longitudinal constitue l'axe de rotation de l'hélice,
- un mât d'accrochage présentant une structure primaire et une arche avant présentant une partie centrale solidaire de la structure primaire et de part et d'autre de la partie centrale par rapport au plan médian, deux prolongements qui s'étendent autour du carter sur au moins 90°,
- une bielle centrale disposée au niveau du plan médian, où la bielle centrale présente une extrémité arrière montée articulée au mât d'accrochage par un premier point de liaison arrière et une extrémité avant montée articulée au carter par un premier point de liaison avant, et
- deux bielles latérales disposées de part et d'autre du plan médian, où chaque bielle latérale présente une extrémité arrière montée articulée au prolongement qui est du même côté du plan médian par un deuxième point de liaison arrière et une extrémité avant montée articulée au carter par un deuxième point de liaison avant et où les axes longitudinaux des bielles latérales et de la bielle centrale convergent sur l'axe longitudinal au niveau du centre de l'hélice, et
- une attache moteur arrière fixant la structure primaire à une partie arrière du carter.

Avec un tel arrangement, les moments générés dans l'ensemble propulsif sont appliqués au niveau du centre de l'hélice et ne surchargent donc pas le carter moteur.

Avantageusement, les deuxièmes points de liaison avant des bielles latérales sont arrangés à 90°±20° autour de l'axe longitudinal à partir du premier point de liaison avant de la bielle centrale.

Avantageusement, les deuxièmes points de liaison avant des bielles latérales sont arrangés à 130°±20° autour de l'axe longitudinal à partir du premier point de liaison avant de la bielle centrale.

Avantageusement, l'ensemble propulsif comporte une attache moteur arrière qui assure la fixation du mât d'accrochage à une partie arrière du carter.

L'invention propose également un aéronef comportant une aile et un ensemble propulsif selon l'une des variantes précédentes dont la structure primaire est fixée sous l'aile.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 représente une vue de côté d'un aéronef selon l'invention,
Fig. 2 est une représentation schématique en vue de côté d'un ensemble propulsif selon un premier mode de réalisation de l'invention,
Fig. 3 est une représentation schématique en vue de face de l'ensemble propulsif selon le premier mode de réalisation de l'invention,
Fig. 4 est une représentation schématique en vue de côté d'un ensemble propulsif selon un deuxième mode de réalisation de l'invention,
Fig. 5 est une représentation schématique en vue de face de l'ensemble propulsif selon le deuxième mode de réalisation de l'invention, et
Fig. 6 est une représentation schématique en vue de derrière d'un ensemble propulsif selon l'invention.

### EXPOSÉ DÉTAILLÉ DE MODES DE RÉALISATION

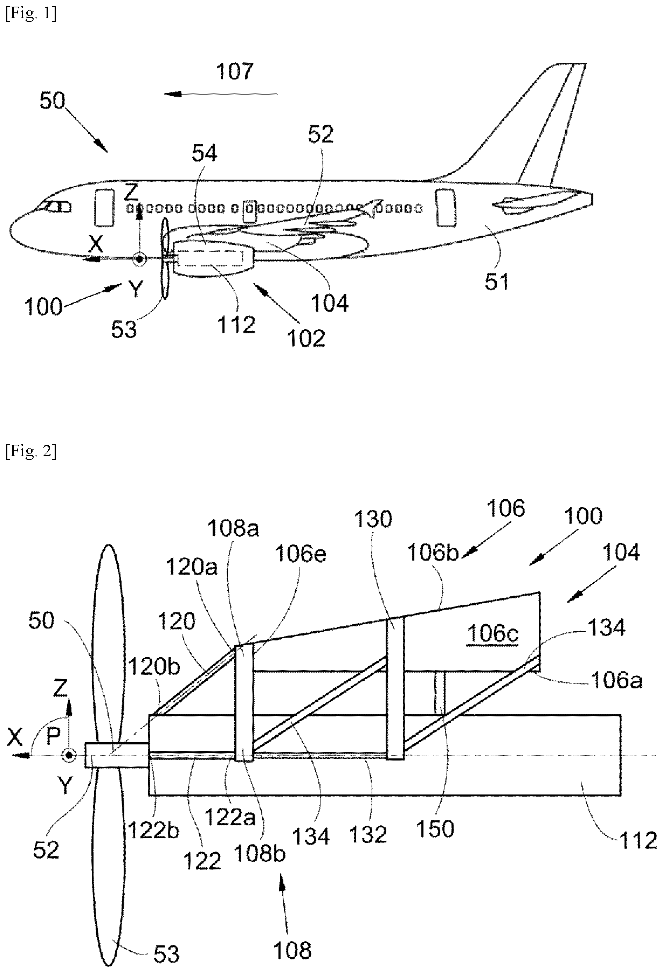

En référence avec la Fig. 1, un aéronef 50 comprend un fuselage 51 auquel est fixée, de chaque côté, une aile 52 sous laquelle est monté au moins un ensemble propulsif 100 selon l'invention.

L'ensemble propulsif 100 comprend un mât d'accrochage 104 fixé sous l'aile 52 et un turboréacteur 102 fixé sous le mât d'accrochage 104. Le turboréacteur 102 est ici du type turboréacteur à soufflante non carénée mais il peut également prendre la forme d'un turboréacteur double flux où la soufflante est carénée. D'une manière générale, le turboréacteur 102 comporte une hélice 53 ou une soufflante mobile en rotation autour d'un axe longitudinal X. Dans la présente demande, le terme « hélice » englobe aussi bien une hélice qu'une soufflante.

Par convention, on appelle X, l'axe longitudinal du turboréacteur 102 et donc de l'ensemble propulsif 100, cet axe longitudinal X étant parallèle à une direction longitudinale de ce turboréacteur 102. D'autre part, on appelle Y, l'axe transversal du turboréacteur 102 qui est horizontal lorsque l'aéronef est au sol, et Z, l'axe vertical ou hauteur verticale lorsque l'aéronef est au sol, ces trois directions X, Y et Z étant orthogonales entre elles.

D'autre part, les termes " avant " et " arrière " sont à considérer par rapport à une direction d'avancement de l'aéronef 50 lors du fonctionnement du turboréacteur 102, cette direction étant représentée schématiquement par la flèche 107 sur la Fig. 1.

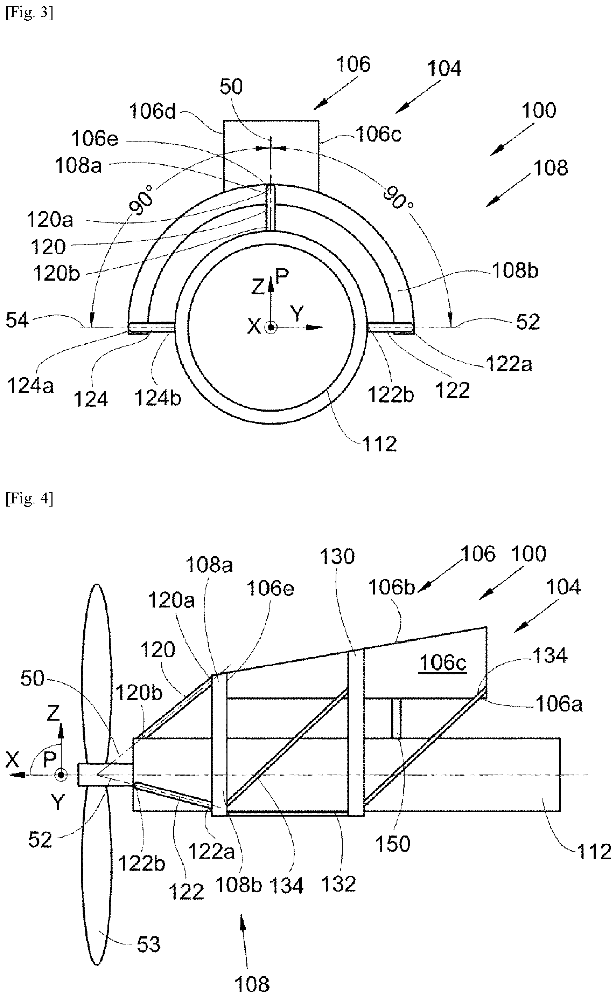

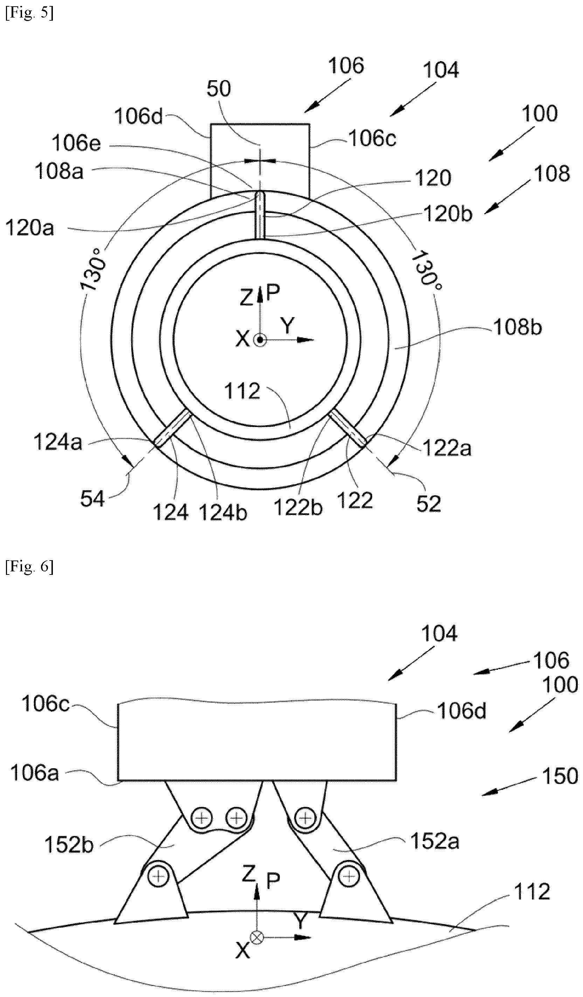

Les Figs. 2 et 3 montrent l'ensemble propulsif 100 selon un premier mode de réalisation de l'invention et les Figs. 4 et 5 montrent l'ensemble propulsif 100 selon un deuxième mode de réalisation de l'invention.

Le turboréacteur 102 comprend de l'avant vers l'arrière, une hélice 53, une nacelle 54 dans laquelle sont logés les autres éléments du turboréacteur 102 et qui prennent la forme d'un noyau présentant un carter 112 dans lequel les autres éléments du turboréacteur 102 sont logés comme de l'avant vers l'arrière des étages de compression, une chambre de combustion, des étages de turbine et un cône d'éjection. Le carter 112 est coaxial avec l'axe longitudinal X qui constitue un axe de rotation du turboréacteur 102.

Le mât d'accrochage 104 est représenté ici par sa structure primaire 106 qui est fixée à la structure de l'aile 52 par tous moyens de solidarisation appropriés et connus de l'homme du métier.

La structure primaire 106 se présente sous la forme d'un caisson s'étendant selon la direction longitudinale X et qui comporte une paroi frontale 106e, située à l'avant de la structure primaire 106, un longeron inférieur 106a s'étendant en dessous de la structure primaire 106 et un longeron supérieur 106b s'étendant au-dessus de la structure primaire 106. La structure primaire 106 comporte également deux parois latérales 106c-d de chaque côté d'un plan médian P vertical. Ces différents longerons et parois sont fixés les uns aux autres pour former la structure primaire 106.

Le mât d'accrochage 104 et le turboréacteur 102 sont globalement symétriques par rapport à un plan médian vertical XZ de l'ensemble propulsif 100 qui passe par l'axe longitudinal X, qui est appelé ici plan médian P et qui sépare le mât d'accrochage 104 et le turboréacteur 102 en deux parties bâbord-tribord.

Le mât d'accrochage 104 comporte également une arche avant 108 présentant une partie centrale 108a et deux prolongements 108b qui sont solidaires de la partie centrale 108a. La partie centrale 108a est solidaire de la structure primaire 106, et plus particulièrement de la paroi frontale 106e ou constitue une partie de la paroi frontale 106e. La partie centrale 108a s'étend de part et d'autre du plan médian P. Les deux prolongements 108b sont disposés de part et d'autre de la partie centrale 108a par rapport au plan médian P, et ils s'étendent autour du carter 112 sur au moins 90° depuis la partie haute du carter 112, c'est-à-dire sur au moins 180° d'un côté à l'autre en passant par le haut. En d'autres termes, en vue de face, les prolongements 108b s'étendent au moins jusqu'à 3 heures d'un côté et 9 heures de l'autre côté, c'est-à-dire respectivement préférentiellement entre 3 heures et 5 heures, et entre 7 heures et 9 heures.

L'ensemble propulsif 100 comporte également une bielle centrale 120 qui est disposée au niveau du plan médian P. La bielle centrale 120 présente une extrémité arrière 120a qui est montée articulée au mât d'accrochage 104 par un premier point de liaison arrière et une extrémité avant 120b qui est montée articulée au carter 112 par un premier point de liaison avant. La fixation au mât d'accrochage 104 s'effectue au niveau de la partie centrale 108a ou de la paroi frontale 106e.

L'ensemble propulsif 100 comporte également deux bielles latérales 122 et 124 qui sont disposées de part et d'autre du plan médian P. Chaque bielle latérale 122, 124 présente une extrémité arrière 122a, 124a qui est montée articulée au prolongement 108b qui est du même côté du plan médian P par un deuxième point de liaison arrière et une extrémité avant 122b, 124b qui est montée articulée au carter 112 par un deuxième point de liaison avant.

Chaque bielle latérale 122, 124 et la bielle centrale 120 présente un axe longitudinal qui s'étend entre ses deux extrémités et qui sont ici représentés par les traits d'axes référencés respectivement 52, 54 et 50. Sur la Fig. 2, l'axe longitudinal 52 de la bielle latérale 122 se confond avec l'axe longitudinal X. Selon l'invention, les axes longitudinaux 50, 52 et 54 des bielles latérales 122 et 124 et de la bielle centrale 120 convergent sur l'axe longitudinal X au niveau du centre de l'hélice 53.

Un tel arrangement permet d'appliquer les moments générés dans l'ensemble propulsif 100 au niveau du centre de l'hélice 53 en ne surchargeant donc pas le carter 112.

Dans les modes de réalisation de l'invention, pour compléter la fixation du turboréacteur 102 au mât d'accrochage 104, l'ensemble propulsif 100 comporte une attache moteur arrière 150 qui fixe la structure primaire 106, et plus particulièrement le longeron inférieur 106a et une partie arrière du carter 112 qui est à l'arrière par rapport aux bielles latérales 122 et 124 et à la bielle centrale 120. Une telle attache moteur arrière 150 assure le transfert des forces d'inertie du carter 112 au mât d'accrochage 104.

La Fig. 6 montre un mode de réalisation particulier de l'attache moteur arrière 150.

L'attache moteur arrière 150 comporte ici une première bielle 152a et une deuxième bielle 152b qui sont disposées de part et d'autre du plan médian P et inscrites dans un plan perpendiculaire à l'axe longitudinal X. L'une des bielles 152a, ici celle de tribord, est montée articulée par un premier point de liaison au longeron inférieur 106a et par un deuxième point de liaison au carter 112, et l'autre bielle 152b, ici celle de bâbord, est montée articulée par un troisième et un quatrième points de liaison au longeron inférieur 106a et par un cinquième point de liaison au carter 112.

Ici, les premier, deuxième, troisième, quatrième et cinquième points de liaison prennent chacun la forme d'une liaison de type chape, où les axes des liaisons chapes sont ici parallèles à l'axe longitudinal X.

La solution présente l'avantage de pouvoir conserver un support, ici l'attache moteur arrière 150, à l'arrière au niveau de la turbine présente dans le carter 112 ce qui est assure une meilleure stabilité globale (par exemple, pour le chargement inertiel du turboréacteur, la stabilité dynamique, etc.) et une meilleure sécurité (p. ex., sensibilité aux sursauts du moteur), tout en limitant le fléchissement du carter 112, ce qui a une incidence sur la gestion des jeux fonctionnels.

Comme précédemment, les points de liaisons des bielles latérales 122 et 124 et de la bielle centrale 120 prennent également la forme de liaison de type chape, préférentiellement rotulée. Pour des raisons de redondance, chaque bielle est doublée. Ainsi, chaque bielle est constituée de deux sous-bielles accolées l'une à l'autre et où les deux sous-bielles présentent les mêmes points de liaison.

Dans le premier mode de réalisation de l'invention, les deuxièmes points de liaison avant 122b et 124b des bielles latérales 122 et 124 sont arrangés à 90°±20° autour de l'axe longitudinal X à partir du premier point de liaison avant de la bielle centrale 120 qui lui est à 12 heures. Ainsi, ici, le deuxième point de liaison avant 122b qui est à tribord est à 90°±20° dans le sens horaire autour de l'axe longitudinal X en vue de face et le deuxième point de liaison avant 124b qui est à bâbord est à 90°±20° dans le sens anti-horaire autour de l'axe longitudinal X en vue de face. Les angles à 90° sont représentés sur la Fig. 3.

Bien sûr, en fonction de la position des deuxièmes points de liaison avant 122b, 124b, les prolongements 108b s'étendront en conséquence.

Dans le deuxième mode de réalisation de l'invention, les prolongements 108b font le tour complet du carter 112. L'arche avant 108 prend ainsi ici la forme d'un anneau qui entoure une portion du carter 112.

Ici, les deuxièmes points de liaison avant 122b et 124b des bielles latérales 122 et 124 sont arrangés à 130°±20° autour de l'axe longitudinal X à partir du premier point de liaison avant de la bielle centrale 120 qui lui est à 12 heures. Ainsi, ici, le deuxième point de liaison avant 122b qui est à tribord est à 130°±20° dans le sens horaire autour de l'axe longitudinal X en vue de face et le deuxième point de liaison avant 124b qui est à bâbord est à 130°±20° dans le sens anti-horaire autour de l'axe longitudinal X en vue de face. Les angles à 130° sont représentés sur la Fig. 5.

Bien sûr, dans ce deuxième mode de réalisation, les prolongements 108b peuvent aller moins loin que le tour complet du carter 112.

Dans les exemples divulgués ci-après, le système de montage du turboréacteur 102 est un système à six degrés de liberté déterminé statiquement, comprenant un degré de liberté attribuable à la bielle centrale 120, un degré de liberté supplémentaire attribuable à chaque bielle latérale 122, 124, et trois degrés de liberté attribuables à l'attache moteur arrière 150. La bielle centrale 120 répartit les charges aérodynamiques selon l'axe longitudinal X et l'axe vertical Z. Les bielles latérales 122 et 124 répartissent les charges aérodynamiques selon l'axe longitudinal X et l'axe transversal Y. L'attache moteur arrière 150 répartit les charges aérodynamiques selon l'axe transversal Y et l'axe vertical Z ainsi que les moments Mx, My et Mz créés par le turboréacteur 102 par coopération/couplage avec les interfaces avant planes assurées par la bielle centrale 120 et les deux bielles latérales 122 et 124.

Dans chacun des deux modes de réalisation présenté ici, le mât d'accrochage 104 est complété par une arche arrière 130 qui présente une partie solidaire de la structure primaire 106 et deux bras qui s'étendent autour du carter 112. L'extension angulaire des bras est globalement égale à l'extension angulaire des prolongements 108b, c'est-à-dire ici 90° pour le premier mode de réalisation et 180° pour le deuxième mode de réalisation de manière à former un anneau arrière.

Le mât d'accrochage 104 comporte également des barres de renfort avec ici des premières barres de renfort 132 fixées entre le prolongement 108b et le bras de l'arche arrière qui est du même côté du plan P et des deuxièmes barres de renfort 134 fixées entre la structure primaire 1006 et chaque prolongement 108b et chaque bras.

## Revendications

1. Ensemble propulsif (100) d'un aéronef (50), ledit ensemble propulsif (100) présentant un axe longitudinal (X) et un plan médian (P) vertical passant par l'axe longitudinal (X) et comportant :
- un turboréacteur (102) comportant un carter (112) autour de l'axe longitudinal (X) et une hélice (53) à l'avant du carter (112), où l'axe longitudinal (X) constitue l'axe de rotation de l'hélice (53),
- un mât d'accrochage (104) présentant une structure primaire (106) et une arche avant (108) présentant une partie centrale (108a) solidaire de la structure primaire (106) et de part et d'autre de la partie centrale (108a) par rapport au plan médian (P), deux prolongements (108b) qui s'étendent autour du carter (112) sur au moins 90°,
- une bielle centrale (120) disposée au niveau du plan médian (P), où la bielle centrale (120) présente une extrémité arrière (120a) montée au mât d'accrochage (104) par un premier point de liaison arrière et une extrémité avant (120b) montée au carter (112) par un premier point de liaison avant, et
- deux bielles latérales (122, 124) disposées de part et d'autre du plan médian (P), où chaque bielle latérale (122, 124) présente une extrémité arrière (122a, 124a) montée au prolongement (108b) qui est du même côté du plan médian (P) par un deuxième point de liaison arrière et une extrémité avant (122b, 124b) montée au carter (112) par un deuxième point de liaison avant,
ledit ensemble propulsif (100) étant **caractérisé en ce que** la bielle centrale (120) est montée articulée au mât d'accrochage (104) et au carter (112), **en ce que** chaque bielle latérale (122, 124) est montée articulée audit prolongement (108b) et au carter (112), **en ce que** les axes longitudinaux des bielles latérales (122, 124) et de la bielle centrale (120) convergent sur l'axe longitudinal (X) au niveau du centre de l'hélice (53), et **en ce que** ledit ensemble propulsif (100) comporte une attache moteur arrière (150) fixant la structure primaire (106) à une partie arrière du carter (112).

2. Ensemble propulsif (100) selon la revendication 1, **caractérisé en ce que** les deuxièmes points de liaison avant (122b, 124b) des bielles latérales (122, 124) sont arrangés à 90°±20° autour de l'axe longitudinal (X) à partir du premier point de liaison avant de la bielle centrale (120).

3. Ensemble propulsif (100) selon la revendication 1, **caractérisé en ce que** les deuxièmes points de liaison avant (122b, 124b) des bielles latérales (122, 124) sont arrangés à 130°±20° autour de l'axe longitudinal (X) à partir du premier point de liaison avant de la bielle centrale (120).

4. Ensemble propulsif (100) selon l'une des revendications 1 à 3, **caractérisé en ce qu'**il comporte une attache moteur arrière (150) qui assure la fixation du mât d'accrochage (104) à une partie arrière du carter (112).

5. Aéronef (50) comportant une aile (52) et un ensemble propulsif (100) selon l'une des revendications précédentes dont la structure primaire (106) est fixée sous l'aile (52).

## Patentansprüche

1. Antriebsanordnung (100) für ein Luftfahrzeug (50), wobei die Antriebsanordnung (100) eine Längsachse (X) und eine vertikale Mittelebene (P), die durch die Längsachse (X) verläuft, aufweist und Folgendes umfasst:
- ein Turbinen-Strahltriebwerk (102), das ein Gehäuse (112) um die Längsachse (X) und einen Propeller (53) an der Vorderseite des Gehäuses (112) umfasst, wobei die Längsachse (X) die Drehachse des Propellers (53) bildet,
- einen Aufhängungspylon (104), der eine Primärstruktur aufweist (106) und einen vorderen Bogen (108), der einen zentralen Teil (108a), der mit der Primärstruktur (106) fest verbunden ist, und beidseits des zentralen Teils (108a) in Bezug auf die Mittelebene (P) zwei Verlängerungen (108b), die sich über mindestens 90° um das Gehäuse (112) erstrecken, aufweist,
- eine zentrale Stange (120), die auf Höhe der Mittelebene (P) angeordnet ist, wobei die zentrale Stange (120) ein hinteres Ende (120a), das über eine erste hintere Verbindungsstelle an dem Aufhängungspylon (104) angebracht ist, und ein vorderes Ende (120b), das über eine erste vordere Verbindungsstelle an dem Gehäuse (112) angebracht ist, aufweist, und
- zwei seitliche Stangen (122, 124), die beidseits der Mittelebene (P) angeordnet sind, wobei jede seitliche Stange (122, 124) ein hinteres Ende (122a, 124a), das an der Verlängerung (108b), die sich auf der gleichen Seite der Mittelebene (P) befindet, über eine zweite hintere Verbindungsstelle angebracht ist, und ein vorderes Ende (122b, 124b), das an dem Gehäuse (112) über eine zweite vordere Verbindungsstelle angebracht ist, aufweist,
wobei die Antriebsanordnung (100) **dadurch gekennzeichnet ist, dass** die zentrale Stange (120) an den Aufhängungspylon (104) und das Gehäuse (112) angelenkt ist, dass jede seitliche Stange (122, 124) an die Verlängerung (108b) und das Gehäuse (112) angelenkt ist, dass die Längsachsen der seitlichen Stangen (122, 124) und der zentralen Stange (120) auf der Längsachse (X) auf Höhe der Mitte des Propellers (53) konvergieren und dass die Antriebsanordnung (100) eine hintere Triebwerksbefestigung (150) umfasst, welche die Primärstruktur (106) an einem hinteren Teil des Gehäuses (112) befestigt.

2. Antriebsanordnung (100) nach Anspruch 1, **dadurch gekennzeichnet, dass** die zweiten vorderen Verbindungsstellen (122b, 124b) der seitlichen Stangen (122, 124) von der ersten vorderen Verbindungsstelle der zentralen Stange (120) aus bei 90° ±20° um die Längsachse (X) angeordnet sind.

3. Antriebsanordnung (100) nach Anspruch 1, **dadurch gekennzeichnet, dass** die zweiten vorderen Verbindungsstellen (122b, 124b) der seitlichen Stangen (122, 124) von der ersten vorderen Verbindungsstelle der zentralen Stange (120) aus bei 130° ±20° um die Längsachse (X) angeordnet sind.

4. Antriebsanordnung (100) nach einem der Ansprüche 1 bis 3, **dadurch gekennzeichnet, dass** sie eine hintere Triebwerksbefestigung (150) umfasst, welche die Befestigung des Aufhängungspylons (104) an einem hinteren Teil des Gehäuses (112) sicherstellt.

5. Luftfahrzeug (50), umfassend eine Tragfläche (52) und eine Antriebsanordnung (100) nach einem der vorhergehenden Ansprüche, deren Primärstruktur (106) unter der Tragfläche (52) befestigt ist.

## Claims

1. Propulsion assembly (100) for an aircraft (50), said propulsion assembly (100) having a longitudinal axis (X) and a vertical median plane (P) passing through the longitudinal axis (X) and having:
- a jet engine (102) having a casing (112) around the longitudinal axis (X) and a propeller (53) in front of the casing (112), wherein the longitudinal axis (X) constitutes the axis of rotation of the propeller (53),
- an attachment pylon (104) having a primary structure (106) and a front arch (108) having a central part (108a) secured to the primary structure (106) and on either side of the central part (108a) with respect to the median plane (P), two extensions (108b) that extend around the casing (112) over at least 90°,
- a central link (120) arranged in the median plane (P), wherein the central link (120) has a rear end (120a) mounted on the attachment pylon (104) via a first rear connection point and a front end (120b) mounted on the casing (112) via a first front connection point, and
- two lateral links (122, 124) arranged on either side of the median plane (P), wherein each lateral link (122, 124) has a rear end (122a, 124a) mounted on the extension (108b) that is on the same side of the median plane (P) via a second rear connection point and a front end (122b, 124b) mounted on the casing (112) via a second front connection point,
said propulsion assembly (100) being **characterized in that** the central link (120) is mounted in an articulated manner on the attachment pylon (104) and on the casing (112), **in that** each lateral link (122, 124) is mounted in an articulated manner on said extension (108b) and on the casing (112), **in that** the longitudinal axes of the lateral links (122, 124) and of the central link (120) converge on the longitudinal axis (X) at the centre of the propeller (53), and **in that** said propulsion assembly (100) has a rear engine attachment (150) fastening the primary structure (106) to a rear part of the casing (112).

2. Propulsion assembly (100) according to Claim 1, **characterized in that** the second front connection points (122b, 124b) of the lateral links (122, 124) are arranged at 90°±20° around the longitudinal axis (X) from the first front connection point of the central link (120).

3. Propulsion assembly (100) according to Claim 1, **characterized in that** the second front connection points (122b, 124b) of the lateral links (122, 124) are arranged at 130°±20° around the longitudinal axis (X) from the first front connection point of the central link (120).

4. Propulsion assembly (100) according to one of Claims 1 to 3, **characterized in that** it has a rear engine attachment (150) that fastens the attachment pylon (104) to a rear part of the casing (112).

5. Aircraft (50) having a wing (52) and a propulsion assembly (100) according to one of the preceding claims, the primary structure (106) of which is fastened beneath the wing (52).
